**Europäisches Patentamt**

**European Patent Office**

**Office européen des brevets**

(11) Publication number: **0 064 599**

**B1**

# (12) EUROPEAN PATENT SPECIFICATION

(45) Date of publication of patent specification: **15.07.87**

(21) Application number: **82102868.5**

(22) Date of filing: **03.04.82**

(51) Int. Cl.⁴: **G 01 K 7/22,** H 01 C 7/04, H 01 C 17/24

(54) **Sensors designed for the measurement of temperature as well as methods of adjusting them.**

(30) Priority: **15.04.81 SE 8102429**

(43) Date of publication of application:
**17.11.82 Bulletin 82/46**

(45) Publication of the grant of the patent:
**15.07.87 Bulletin 87/29**

(84) Designated Contracting States:
**AT BE CH DE FR GB IT LI LU NL**

(56) References cited:
**US-A-4 041 440**
**US-A-4 332 081**

(73) Proprietor: **Crafon Aktiebolag**
**c/o AB Astra Legal Department**
**S-151 85 Södertälje (SE)**

(72) Inventor: **Häkanson, Bo Häkan**
**Astrakanvägen 6**
**S-223 56 Lund (SE)**

(74) Representative: **Näsman, Rune B. G. et al**
**AB Astra Patent and Trade Mark Department**
**S-151 85 Södertälje (SE)**

The file contains technical information submitted after the application was filed and not included in this specification

Courier Press, Leamington Spa, England.

# 0 064 599

**Description**

## Technical field

This invention deals with a sensor intended for the measurement of temperatures in which the electrical properties, for example, resistance, vary with the temperature, including a heat sensitive part, for which the property mentioned can be measured.

The arrangement according to the invention is firstly designed to be used for measurement of temperatures medicinally. An object of the present invention is therefore to make this arrangement so cheap and simple that it can be thrown away after use, that is to say, that it need not be re-used.

At the same time it must be capable of being used with such accuracy that reliance can be placed on the value read off, which is of the greatest importance in connection with medical use. For those in business it is evident, however, that the device according to the invention can be used in other connections, for genuine industrial applications when one requires a simple and cheap, but reliable temperature reading.

## Technical standpoint

In the US—A—4 317 367 as well as in the WO—A—80/00191, WO—A—80/000192 and WO—A—80/01608 several designs of thermometer are described in which sensors according to the invention could be inserted.

In the two patents US—A—4 200 970 and US—A—4 236 298 several processes for adjusting thermistors intended as sensors in similar designs of thermometer are described. These and other processes for adjustment suffer from the disadvantage that heat is developed in all mechanical processing of the temperature sensitive parts of the sensors. Thereby the control measurement which ought to be done at an exactly pre-determined temperature, is rendered difficult.

US—A—4 041 440 describes a functionally adjusted thick film network comprising a resistor, a thermistor and conductors. A method is described whereby the resistance and the temperature-resistance profile of the thermistor may be adjusted by providing parallel electrical paths in the thermistor and severing one or more of said paths. Subsequently the resistance of the entire circuit may be adjusted by measuring said resistance and trimming the resistor. The reference acknowledges the problem that trimming may heat the thermistor, thus affecting the resistance value thereof. The solution to this problem provided is to have thermistors spaced from the parts severed or trimmed.

## Description of the invention

According to the invention there is provided a temperature measuring sensor whose resistance varies with temperature and having a predetermined resistance value comprising an electrically non-conductive base member, a first heat-sensitive material (5) applied to a first portion of said electrically non-conductive base member, a second heat-sensitive material (6) applied to a second portion of said electrically non-conductive base member, said second heat-sensitive material being substantially less sensitive to variations in temperature than said first heat-sensitive material, and electrical contact portions applied to said electrically non-conductive base member, characterized in said first and second heat-sensitive materials being in substantial juxtaposition with each other, said electrical contact portions including a longitudinally extending first electrical contact portion (3) between said first and second heat-sensitive materials, said longitudinally extending first electrical contact portion including first and second longitudinal sides, said first longitudinal side being in direct contact with said first heat-sensitive material (5) and said second longitudinal side being in direct contact with said second heat-sensitive material (6), a second electrical contact portion (2) in direct contact with a side of said first heat-sensitive material opposite that of said first electrical contact portion, and a third electrical contact portion (4) in direct contact with an opposite side of said second heat-sensitive material from that of said first electrical contact portion, whereby said resistances of said first and second heat-sensitive materials can be separately measured across said first and second electrical contact portions, and said first and third electrical contact portions, respectively, at predetermined temperatures, thus that the overall resistance for said temperature measuring sensor can be calculated therefrom, and the overall resistance of said temperature measuring sensor can be made to substantially correspond to said predetermined resistance value by adjusting only the resistance for said second heat-sensitive material. Preferably the initial heat sensitive part mentioned is made of a thermistor material between a first and a second contact. As examples of such materials, mention can be made of such materials sold by Electro Materials Corporation of America (EMCA) under the name "5000—1 TM Thermistor Inks" which have the following properties:

| Resistance | Name | TCR, ppm/°C |
|---|---|---|
| 300Ω | 5032—1 TM | −7000±500 |
| 1K | 5013—1 TM | −8500±500 |
| 10K | 5014—1 TM | −9500±500 |
| 100K | 5015—1 TM | −9500±500 |
| 1 Meg | 5016—1 TM | −9500±500 |

As materials for the said second less heat-sensitive parts, there can be selected a resistance material with less sensitivity to heat between a said first a third contacts.

As an example of resistance materials, mention can be made of such materials sold by Electro Materials Corporation of America (EMCA) under the name "5000 Series Resistor Inks", which have the following properties:

| Property | 5000 | 5500 | 5000—1 | 5100—1 | 5500—1 |
|---|---|---|---|---|---|
| Burning temp. °C | 800 | 800 | 850 | 850 | 850 |
| TCR ppm/°C | ±200 | ±50 | ±200 | ±100 | ±50 |
| Range of resistance Ω/sq | 10—10 Meg | 100—100K | 10—10 Meg | 10—1 Meg | 100—100K |
| Resistance tolerance in % | ±20 | ±10 | ±20 | ±15 | ±10 |

The sensor according to the invention can be produced with the help of the thick film technique on an electric non-conducting material such as an alumina substrate, which is sold under the name AT-3995 from Narumi China Corporation, Japan.

The invention also includes a method for adjusting a sensor of the kind described above, whereby this method is characterized in that the resistance is measured on one hand for the first heat-sensitive part at a fixed temperature, for example 38°C, and on the other hand for the second less heat-sensitive part at a discretionary temperature. It is appropriate, however, that this temperature is chosen to be about 38°C. Finally, the second part is adjusted, for example by removal of material dependent on the two measurements mentioned.

Thanks to the fact that the second part is less heat-sensitive, the resistance for this part is measured during the final adjustment, which can be interrupted when the desired value has been reached.

Drawing

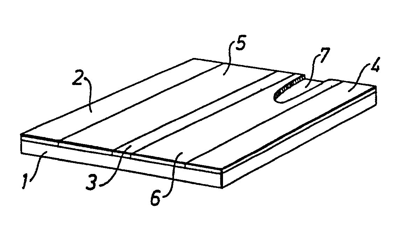

The attached drawing contains only one diagram, which is designed to illustrate a preferred form of a sensor made according to the invention in its adjusted state.

Preferred design of the invention

The sensor according to the invention shown as an example consists of a base 1 of an electrically non-conducting material, such as an alumina substrate of the type described above. On this base, contacts 2, 3 and 4 have been produced with the help of the thick film technique. In the same way, a thermistor part 5 and a resistor part 6 have been produced. The thermistor part has been made with the help of the thick film technique using a thermistor material of, for example the kind described above and the resistor part has been made with the help of a resistance material also described above. The reference numeral 7, finally, is indicating a part of the material cut out from the resistance part 6 in connection with the adjustment. This adjustment is done by, for example, laser or blast technique or some other convenient kind of mechanical processing.

The dimensioning of the sensors can be done in a manner which is described in the following example. If one requires a total resistance of 4000Ω at 38°C, one can, for the thermistor part, chose resistance of about 3900Ω and for the resistance part 50Ω. The resistance is then read off for the thermistor part 5 at 38°C. If one then gets a value of 3925, the resistance part 6 is then adjusted to a value of exactly 75Ω. This can be done in such a way that the measuring electrodes are held in contact with contacts 3 and 4 during the whole of the adjustment, which can be interrupted when the required value is obtained. Since the resistance part 6 is less heat sensitive and can, furthermore, be given an original value considerably beneath that for the thermistor part 5, the final result will not noticeably be effected by the heat received on adjusting. This can easily be controlled by a final control measurement after cooling to 38°C.

The invention is naturally not limited only to the example described above, but can be varied within the frame of the proceeding claims. Compare also the European patent application EP—A—0 063 295, namely "Method of producing thermistors, thermistors produced by this method as well as thermometers containing such thermistors", which describes an alternative to the above invention, but with common points of similarity.

### Claims

1. A temperature measuring sensor whose resistance varies with temperature and having a predetermined resistance value comprising an electrically non-conductive base member (1), a first heat-sensitive material (5) applied to a first portion of said electrically non-conductive base member, a second heat-sensitive material (6) applied to a second portion of said electrically non-conductive base member, said second heat-sensitive material being substantially less sensitive to variations in temperature than said first heat-sensitive material, and electrical contact portions applied to said electrically non-conductive base member, characterized by said first and second heat-sensitive materials being in substantial juxtaposition with each other, said electrical contact portions including a longitudinally extending first electrical contact portion (3) between said first and second heat-sensitive materials, said longitudinally extending first electrical contact portion including first and second longitudinal sides, said first longitudinal side being in direct contact with said first heat-sensitive material (5) and said second longitudinal side being in direct contact with said second heat-sensitive material (6), a second electrical contact portion (2) in direct contact with a side of said first heat-sensitive material opposite that of said first electrical contact portion, and a third electrical contact portion (4) in direct contact with an opposite side of said second heat-sensitive material from that of said first electrical contact portion, whereby said resistance of said first and second heat-sensitive materials can be separately measured across said first and second electrical contact portions, and said first and third electrical contact portions, respectively, at predetermined temperatures so that the overall resistance for said temperature measuring sensor can be calculated therefrom and the overall resistance of said temperature measuring sensor can be made to substantially correspond to said predetermined resistance value by adjusting only the resistance for said second heat-sensitive material.

2. The temperature measuring sensor of claim 1 characterized in that said first heat-sensitive material (5) comprises a thermistor material.

3. The temperature measuring sensor of claim 2 characterized in that said second heat-sensitive material (6) comprises a resistance material.

4. The temperature measuring sensor of claims 2 and 3 characterized in that the original value of resistance of the resistance part (6) is considerably beneath that for the thermistor part (5).

5. The temperature measuring sensor of one or more of claims 1—3 wherein both said first and second heat-sensitive materials comprise thick films applied to said electrically non-conductive base member.

6. A temperature measuring sensor of one or more of claims 1—5 characterized in that only the second heat-sensitive material (6) has had its resistance adjusted by having material removed (at 7) therefrom.

7. A method for adjusting a sensor according to any of the preceding claims, characterized in that the resistance is measured on one hand partly for the first heat-sensitive part (5) across the first (3) and second (2) contact portions at a fixed temperature, and on the other hand for the second less heat-sensitive part (6) across the first (3) and third (4) contact portions, whereby finally the second part (6) is adjusted by for example, removing material (at 7) in relation to the two measurements mentioned.

8. A method according to claim 7 characterized in that the resistance for the second part (6) is measured during the entire adjustment, which is interrupted when the desired value has been obtained.

### Patentansprüche

1. Temperaturmeßfühler, dessen Widerstand sich mit der Temperatur ändert und mit einem vorbestimmten Widerstandswert, umfassend ein elektrisch nicht-leitendes Basiselement (1), ein erstes wärmeempfindliches Material (5), das auf einen ersten Teil des elektrisch nicht-leitenden Basiselements aufgebracht ist, ein zweites wärmeempfindliches Material (6), das auf einen zweiten Teil des elektrisch nicht-leitenden Basiselements aufgebracht ist, wobei das zweite wärmeempfindliche Material wesentlich weniger empfindlich für Temperaturunterschiede ist als das erste wärmeempfindliche Material, und elektrische Kontaktteile, die am elektrisch nichtleitenden Basiselement angebracht sind, dadurch gekennzeichnet, daß das erste und das zweite wärmeempfindliche Material im wesentlichen nebeneinander angeordnet sind, wobei die elektrischen Kontaktteile einen sich in Längsrichtung erstreckenden ersten elektrischen Kontaktteil (3) zwischen dem ersten und dem zweiten wärmeempfindlichen Material umfassen, wobei der sich in Längsrichtung erstreckende erste elektrische Kontaktteil eine erste und eine zweite Längsseite umfaßt, wobei die erste Längsseite sich in direktem Kontakt mit dem ersten wärmeempfindlichen Material (5) und die zweite Längsseite sich in direktem Kontakt mit dem zweiten wärmeempfindlichen Material (6) befindet, daß sich ein zweiter elektrischer Kontaktteil (2) in direktem Kontakt mit einer Seite des ersten wärmeempfindlichen Materials gegenüber jener des ersten elektrischen Kontaktteils befindet und daß sich ein dritter elektrischer Kontaktteil (4) in direktem Kontakt mit einer Seite des zweiten wärmeempfindlichen Materials befindet, die jener des ersten elektrischen Kontaktteils gegenüberliegt, wodurch der Widerstand des ersten und zweiten wärmeempfindlichen Materials bei vorbestimmten Temperaturen quer über den ersten und zweiten elektrischen Kontaktteil, bzw. den ersten und dritten elektrischen Kontaktteil separat gemessen werden kann, sodaß der Gesamtwiderstand für den Temperaturmeßfühler daraus errechnet werden kann und der Gesamtwiderstand des Temperaturmeßfühlers durch alleinige Einstellung des Widerstands für das zweite wärmeempfindliche Material im wesentlichen in Übereinstimmung mit dem vorbestimmten Widerstandswert gebracht werden kann.

2. Temperaturmeßfühler des Anspruchs 1, dadurch gekennzeichnet, daß das erste wärmeempfindliche Material (5) ein Thermistormaterial umfaßt.

3. Temperaturmeßfühler des Anspruchs 2, dadurch gekennzeichnet, daß das zweite wärmeempfindliche Material (6) ein Widerstandsmaterial umfaßt.

4. Temperaturmeßfühler der Ansprüche 2 und 3, dadurch gekennzeichnet, daß der ursprüngliche Widerstandswert des Widerstandsteils (6) wesentlich unter jenem des Thermistorteils (5) liegt.

5. Temperaturmeßfühler eines oder mehrerer der Ansprüche 1—3, worin sowohl das erste als auch das zweite wärmeempfindliche Material einen dicken Film umfassen, der auf das elektrische nicht-leitende Basiselement aufgebracht ist.

6. Temperaturmeßfühler eines oder mehrerer der Ansprüche 1—5, dadurch gekennzeichnet, daß nur beim zweiten wärmeempfindlichen Material (6) der Widerstand eingestellt worden ist, indem (bei 7) Material davon entfernt worden ist.

7. Verfahren zur Einstellung eines Fühlers nach einem der vorhergehenden Ansprüche, dadurch gekennzeichnet, daß der Widerstand einerseits teilweise für den ersten wärmeempfindlichen Teil (5) quer über den ersten (3) und zweiten (2) Kontaktteil bei einer feststehenden Temperatur gemessen wird, und anderseits für den zweiten, weniger wärmeempfindlichen Teil (6) quer über den ersten (3) und dritten (4) Kontaktteil gemessen wird, wobei schließlich der zweite Teil (6), beispielsweise durch Entfernen von Material (bei 7) im Verhältnis zu den beiden erwähnten Messungen eingestellt wird.

8. Verfahren nach Anspruch 7, dadurch gekennzeichnet, daß der Widerstand für den zweiten Teil (6) während der gesamten Einstellung gemessen wird, welche unterbrochen wird, wenn der gewünschte Wert erreicht worden ist.

## Revendications

1. Capteur de température, dont la résistance varie en fonction de la température et qui possède une valeur de résistance prédéterminée, comportant un organe de base non électroconducteur (1), un premier matériau thermosensible (5) appliqué sur une première partie dudit organe de base non électroconducteur, un second matériau de base thermosensible (6) appliqué sur une seconde partie dudit organe de base non électroconducteur, ledit second matériau thermosensible étant nettement moins sensible à des variations de la température que ledit premier matériau thermosensible, et des éléments de contact électriques appliqués audit organe de base non électroconducteur, caractérisé en ce que lesdits premier et second matériaux thermosensibles sont juxtaposés l'un à l'autre d'une manière substantielle, et que lesdits éléments de contact électriques comportent une première partie de contact électrique (3) s'étendant longitudinalement entre lesdits premier et second matériaux thermosensibles, en ce que ladite première partie de contact électrique s'étendant longitudinalement comprend des premier et second côtés longitudinaux, ledit premier côté longitudinal étant en contact direct avec ledit premier matériau thermosensible (5) et ledit second côté longitudinal étant en contact direct avec ledit second matériau thermosensible (6), en ce qu'une seconde partie de contact électrique (2) est en contact direct avec un côté dudit premier matériau thermosensible, qui est à l'opposé du côté de ladite première partie de contact électrique, et en ce qu'une troisième partie de contact électrique (4) est en contact direct avec un côté dudit second matériau thermosensible, qui est à l'opposé du côté de ladite première partie de contact électrique, ce qui a pour effet que lesdites résistances desdits premier et second matériaux thermosensibles peuvent être mesurées séparément entre lesdites première et seconde parties de contact électrique, et lesdites première et troisième parties de contact électrique, respectivement à des températures prédéterminées, de sorte que la résistance globale dudit capteur de température peut être calculée à partir de ces résistances et que la résistance globale dudit capteur de température peut être ajustée de manière à correspondre essentiellement à ladite valeur de résistance prédéterminée, par ajustement uniquement de la résistance prévue pour ledit second matériau thermosensible.

2. Capteur de température selon la revendication 1, caractérisé en ce que ledit premier matériau thermosensible (5) comprend un matériau formant thermistance.

3. Capteur de température selon la revendication 2, caractérisé en ce que ledit second matériau thermosensible (6) comprend un matériau formant résistance.

4. Capteur de température selon les revendications 2 et 3, caractérisé en ce que la valeur ohmique originale de la partie formant résistance (6) est nettement inférieure à celle de la partie formant thermistance (5).

5. Capteur de mesure selon l'une quelconque des revendications 1—3, dans lequel à la fois lesdits premier et second matériaux thermosensibles comprennent des couches épaisses appliquées sur ledit organe de base non électroconducteur.

**0 064 599**

6. Capteur de température selon l'une quelconque des revendications 1—5, caractérisé en ce que la résistance uniquement du second matériau thermosensible (6) est ajustée par enlèvement de matière (en 7) à partir de ce dernier.

7. Procédé pour régler un capteur selon l'une quelconque des revendications précédentes, caractérisé en ce que la résistance est mesurée d'une part partiellement pour la première partie thermosensible (5) entre les première (3) et seconde (2) parties de contact à une température fixe, et d'autre part pour la seconde partie moins thermosensible (6) entre les première (3) et troisième (4) parties de contact, ce qui a pour effet qu'en définitive la seconde partie (6) est ajustée par exemple par enlèvement de matière (en 7) en fonction des deux mesures mentionnées.

8. Procédé selon la revendication 7, caractérisé en ce que la résistance de la seconde partie (6) est mesurée pendant l'ensemble de l'ajustement qui est interrompu lorsque la valeur désirée a été obtenue.

6